# EUROPÄISCHE PATENTSCHRIFT

(11) **EP 0 738 459 B1**
(45) Veröffentlichungstag und Bekanntmachung des Hinweises auf die Patenterteilung: **11.07.2001**
(21) Anmeldenummer: 96105609.0
(22) Anmeldetag: 10.04.1996
(51) Int. Cl.: A01B 63/00, A01B 63/26, A01B 39/24, A01B 35/30

(54) **Landwirtschaftliches Gerät mit einer Tiefensteuerung**
Depth control for agricultural apparatus
Appareil agricole à contrôle de profondeur

(30) Priorität: 17.04.1995 US 423620
(43) Veröffentlichungstag der Anmeldung: 23.10.1996
(73) Patentinhaber: DEERE & COMPANY, Moline, Illinois 61265-8098 (US)
(72) Erfinder: Lowe, Terry Lee, Ankeny, Iowa 50021 (US); Noonan, James Thomas, Johnston, Iowa 50131 (US)
(74) Vertreter: Feldmann, Bernhard

(56) Entgegenhaltungen:
- EP-A- 0 068 477
- DE-U- 8 422 422
- FR-A- 2 606 246
- GB-A- 539 003
- US-A- 3 063 504
- US-A- 3 705 630
- US-A- 4 423 788

## Beschreibung

Die Erfindung bezieht sich auf ein landwirtschaftliches Gerät mit einer Werkzeugschiene, wenigstens einem an diese vertikal verstellbar anschließbaren Werkzeugträger und einer Tiefensteuerung zum Führen des Werkzeugträgers in einem vorgegebenen Abstand über dem Boden, wobei die Tiefensteuerung mindestens ein auf dem Boden laufendes Rad aufweist, das an einem am Werkzeugträger angelenkten Steuerarm angeschlossen ist, der über eine Einstellvorrichtung vertikal verstellbar ist, und der Steuerarm zwischen seinen Enden am Werkzeugträger derart angelenkt ist, daß sein oberes Ende oberhalb des Werkzeugträgers liegt und mit der Einstellvorrichtung verbunden ist.

Derartige landwirtschaftliche Geräte können mit den unterschiedlichsten den Boden bearbeitenden oder bestellenden Arbeitswerkzeugen ausgestattet sein. Eins oder mehrere dieser Arbeitswerkzeuge sind an dem Werkzeugträger, der sich in der Regel in Fahrtrichtung erstreckt, anschließbar und bearbeiten oder bestellen den Boden in einer vorgegebenen Tiefe. Normalerweise sind solche Geräte sehr breit, und eine Vielzahl von Werkzeugträgern ist an der quer zur Arbeitsrichtung verlaufenden Werkzeugschiene über Parallelgestänge höhenverstellbar anschließbar. Bei den landwirtschaftlichen Geräten kann es sich um Grubber, Einzelkornsämaschinen, Reihensämaschinen usw. handeln.

In der FR-A-2 606 246 ist ein landwirtschaftliches Gerät gattungsgemäßer Art beschrieben. Es weist einen Werkzeugträger mit einer Tiefensteuerung mit einem auf dem Boden laufenden Rad auf, das an einem am Werkzeugträger angelenktem Steuerarm angeschlossen ist. Der Steuerarm ist in nicht näher beschriebener Weise am Werkzeugträger derart angelenkt, daß sein oberes Ende oberhalb des Werkzeugträgers liegt und mit einer Einstellvorrichtung verbunden ist.

Die EP-A-68 477 offenbart einen Lenker in Form eines Hohlprofils mit einer Anlenkstelle für landwirtschaftliche Geräte, bei dem Lagerbuchsen in entsprechende Ausnehmungen des Hohlprofils eingebracht sind, in denen ein Bolzen aufgenommen wird, an dem beidseitig des Hohlprofils positionierte Platten befestigt sind. Diese Platten dienen zur Halterung eines Werkzeugträgers. Als nachteilig ist dabei anzusehen, daß ein gewisser Abstand zwischen den eingesetzten Lagerbuchsen verbleibt, so daß das Hohlprofil in unerwünschter Weise verformt (zusammengedrückt) werden kann, falls die Mutter des Bolzens mit einem zu hohen Drehmoment angezogen wird.

Die der Erfindung zugrunde liegende Aufgabe wird darin gesehen, die bei der bekannten Anlenkstelle aufgezeigten Probleme zumindest teilweise zu lösen bzw. die Voraussetzungen zu deren Lösung zu schaffen.

Der sich in Fahrtrichtung erstreckende Werkzeugträger ist erfindungsgemäß hohlförmig ausgebildet. Bei der Anlenkung des Steuerarms an den Werkzeugträger können unter Umständen Probleme deshalb auftreten, weil der Werkzeugträger nicht stabil genug ist, um den auftretenden Momenten standzuhalten. Nach der Erfindung, wie in Anspruch 1 definiert, ist daher in dem Werkzeugträger eine Zapfenlagerbuchse vorgesehen, mit der der Steuerarm schwenkbar zwischen seinen Enden verbunden ist. Die Zapfenlagerbuchse verhindert ein seitliches Eindrücken des Werkzeugträgers bei einem Anschluß des Steuerarms.

Zweckmäßig ist der Steuerarm außerdem zumindest im Bereich seiner Anlenkstelle am Werkzeugträger gegabelt ausgebildet und weist einen ersten und einen zweiten Schenkel auf, deren gegenseitiger Abstand der Breite oder etwa der Breite des Werkzeugträgers entspricht.

Die Zapfenlagerbuchse weist einen ersten und einen zweiten jeweils von außen in den Werkzeugträger drehfest einsetzbaren Hülsenteil mit einer äußeren Lagerfläche zur drehbaren Aufnahme (insbesondere je eines Schenkels) des Steuerarms auf, wobei beide Hülsenteile im eingesetzten Zustand miteinander verbindbar sind und beide Hülsenteile im eingesetzten Zustand mit ihren der Lagerfläche abgelegenen Enden gegeneinander anliegen. Auf diese Weise wird eine einfache aber besonders wirkungsvolle Lagerung des Steuerarms erzielt, wobei nach der Erfindung dann die Lagerflächen der Zapfenlagerbuchse im eingesetzten Zustand an den Außenseiten der Seitenwände des Werkzeugträgers liegen und den Steuerarm (insbesondere seine Schenkel) drehbar aufnehmen, die durch mindestens eine Unterlegscheibe und eine durch die Zapfenlagerbuchse geführte Schraubverbindung gesichert sind.

Zweckmäßig hat dann der als Lagerfläche ausgebildete Abschnitt einen größeren Außenumfang oder Durchmesser als der in den Werkzeugträger einsetzbare Teil. Die drehfeste Verbindung kann durch radiale Spitzen, die beim Einsetzen der Zapfenlagerbuchse in die Innenwandung einer entsprechenden Öffnung in den Werkzeugträger eindringen, leicht erreicht werden. Selbstverständlich sind auch andere drehfeste Verbindungen, wie Nuten und Zähne oder axial gerichtete Stifte denkbar.

Ein weiterer erfindungsgemäßer Vorschlag sieht vor, daß die Einstellvorrichtung mit einem Gewindeabschnitt versehen und an zwei mit dem Werkzeugträger verbundene hochstehende Platten angeschlossen ist, wobei die oberen Enden der Schenkel des Steuerarms über einen Drehzapfen miteinander verbunden sind, der das eine Ende der als Kurbel ausgebildeten Einstellvorrichtung und eine Tiefenanzeige aufnimmt. Der Drehzapfen dient damit zunächst als Abstandshalter für die Schenkel des Steuerarms. Der Gewindeteil kann dann in den Drehzapfen eingeschraubt werden. Bevorzugt ist jedoch eine Ausführung, bei der zwischen den beiden Platten ein weiterer Drehzapfen vorgesehen ist, der eine den Gewindeteil der Kurbel aufnehmende Gewindebohrung aufweist. Bei einem Drehen der Kurbel wird dann der Steuerarm entsprechend verstellt. Der Griff der Kurbel kann an einer Stelle plaziert werden, die leicht zugänglich ist und in deren Nähe sich weitere Stellvorrichtungen befinden. Die Tiefenanzeige ermöglicht ein leichtes und schnelles Wiederauffinden einer einmal eingestellten Arbeitsstellung. Zweckmäßig kann die Tiefenanzeige einen mit dem Drehzapfen verbundenen Zeiger aufweisen, der mit einer Markierung an einer der mit dem Werkzeugträger verbundenen Platten zusammenwirkt, da sich der Zeiger bei einer Verstellung im wesentlichen nur in Fahrtrichtung bewegt.

Je nach den Einsatzverhältnissen kann es sinnvoll sein, daß das auf dem Boden laufende Einstellrad der Tiefensteuerung eine größere oder eine kleinere Breite aufweist oder sogar als Doppelrad ausgebildet ist. Damit für solche Fälle der Steuerarm nicht immer abgebaut und durch einen anderen ersetzt werden muß, sieht die Erfindung schließlich noch vor, daß der Steuerarm an seinem der Einstellvorrichtung abgelegenen unteren Ende mit Radträgern unterschiedlicher Größe für die Aufnahme von einem oder mehreren auf dem Boden laufenden Rädern verbindbar ist.

In der Zeichnung ist ein nachfolgend näher erläutertes. Ausführungsbeispiel der Erfindung dargestellt. Es zeigt:
- Fig. 1: eine höhenverstellbare Reiheneinheit eines Grubbers mit einer Tiefensteuerung in Seitenansicht,
- Fig. 2: eine in einen Werkzeugträger eingesetzte Zapfenlagerbuchse der Tiefensteuerung in Blickrichtung der Pfeile 2 : 2 in Fig. 1,
- Fig. 3: den Hülsenteil einer Zapfenlagerbuchse,
- Fig. 4: die Einstellvorrichtung der Tiefensteuerung mit einer Tiefenanzeige in perspektivischer Ansicht,
- Fig. 5: einen Ausschnitt der Tiefensteuerung in perspektivischer Ansicht von rückwärts,
- Fig. 6a: ein einfaches Einstellrad der Tiefensteuerung und
- Fig. 6b: ein doppeltes Einstellrad der Tiefensteuerung.

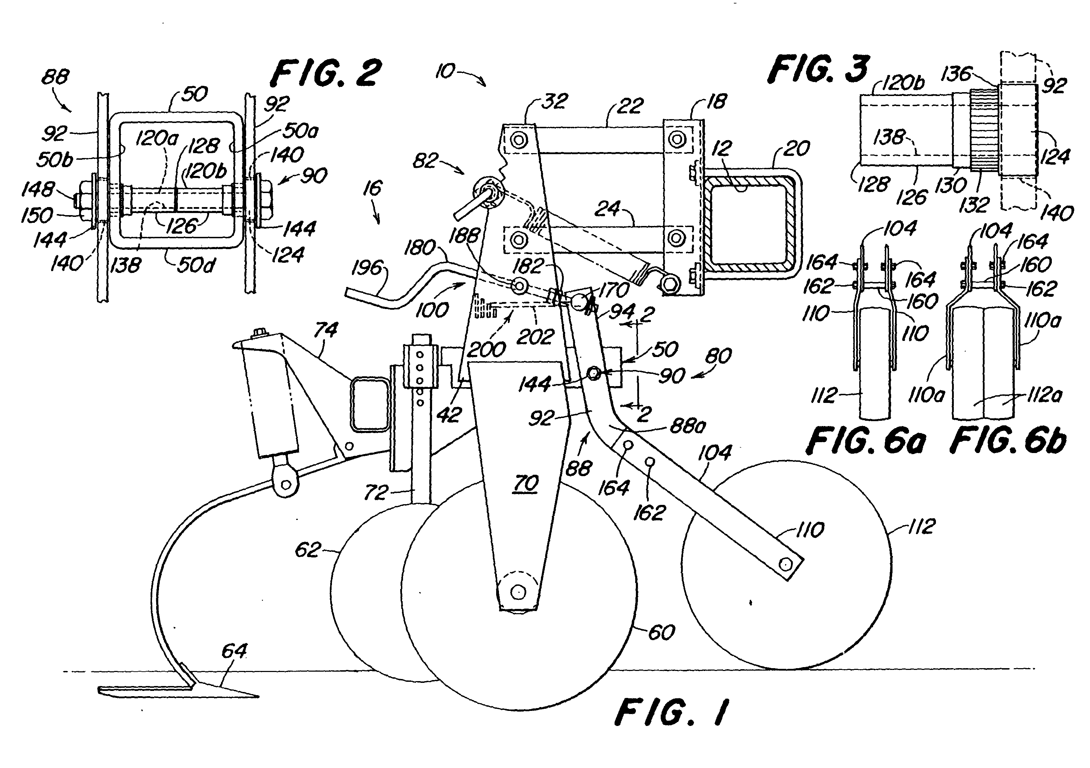

In Fig. 1 der Zeichnung ist ein landwirtschaftliches Gerät 10, wie beispielsweise ein Bodenbearbeitungsgerät in Form eines Grubbers, auszugsweise dargestellt. Man erkennt einen im Schnitt dargestellten Rahmen oder eine Werkzeugschiene 12, die sich im Einsatz quer zur Arbeitsrichtung erstreckt und an eine nicht dargestellte vertikal verstellbare Gerätedreipunktkupplung eines Ackerschleppers anschließbar ist. An die Werkzeugschiene 12 sind eine Vielzahl von Reiheneinheiten 16 mit gegenseitigem Querabstand anschließbar. Die Reiheneinheiten können je nach der Geräteart mit Austragvorrichtungen für Saatgut und/oder Dünger oder mit Bodenbearbeitungswerkzeugen versehen sein. In jedem Fall kann die Eindringtiefe in den Boden gesteuert werden. Jede Reiheneinheit ist über hochstehende Flanschteile 18 und zugehörige Bügelschrauben 20 an die Werkzeugschiene 12 anschließbar. Die Flanschteile 18 sind mit nach rückwärts weisenden Schenkeln versehen, an die bei dem bevorzugten Ausführungsbeispiel zwei übereinanderliegende Lenker 22, 24 oder Hohlprofilträger mit rechteckigem Querschnitt vertikal verschwenkbar angeschlossen sind. Die rückwärtigen Enden dieser Lenker 22 und 24 sind an den Innenseiten von zwei hochstehenden und zueinander Querabstand aufweisenden Platten 32 und 34 mittels Gelenkverbindungen 36 und 38 vertikal verstellbar angeschlossen. Die Platten 32 und 34 verengen sich aufwärts und haben untere mit Durchgangslöchern versehene Enden 42 und 44, die aufeinander zu abgewinkelt sind und dann bodenwärts auslaufen. Dieser Bereich dient der Aufnahme eines Werkzeugträgers in Form eines Hohlträgers 50.

Der Hohlträger 50 dient der Werkzeugaufnahme, erstreckt sich in Arbeitsrichtung und ist etwa in waagerechter Ausrichtung mit den Enden 42 und 44 über Schrauben 52 und 54 verbunden. Dies ist in Fig. 5 zu erkennen. Der Hohlträger ist im Querschnitt rechteckig ausgebildet, wobei seine Seitenwände mit 50a und 50b, seine Oberseite mit 50c und seine Unterseite mit 50d bezeichnet sind. Bei dem bevorzugten Ausführungsbeispiel können an den Hohlträger 50 eine Vielzahl von Bodenbearbeitungswerkzeugen, wie sie in Fig. 1 bei 60, 62 und 64 angedeutet sind, über Werkzeughalter 70, 72 und 74 und Laschen und/oder Querrohre angeschlossen werden. Im Falle von Bodenbearbeitungsgeräten arbeiten die Werkzeuge einer jeden Reiheneinheit zwischen jeweils zwei benachbarten Pflanzenreihen. Außerdem können die Hohlträger 50 über die Enden 42 und 44 der Platten 32 und 34 beliebig weit nach vorne und hinten überstehen, so daß genügend Platz für zahlreiche Werkzeugkombinationen und Gruppierungen geschaffen ist.

Im Bereich des vorderen Endes eines jeden Hohlträgers 50 ist noch eine Tiefensteuerung 80 vorgesehen, über die die Eindringtiefe der Bodenbearbeitungswerkzeuge 60 bis 64 in den Boden geregelt werden kann. Je nach den Bodenverhältnissen sollte aber auf die Bodenbearbeitungswerkzeuge ein nach unten gerichteter und einstellbarer Druck wirken, was über eine Federspannvorrichtung 82 erfolgen kann. Diese ist in unserer europäischen Patentanmeldung mit der Bezeichnung "Landwirtschaftliches Gerät mit einer Vorrichtung zum Einstellen des Bodendruckes der Werkzeuge", die aus der Patentanmeldung aus den VStvA mit dem Aktenzeichen 08/422,925 vom 17.04.1995 die Priorität in Anspruch nimmt, im einzelnen beschrieben. Die Federspannvorrichtung 82 ist zwischen den Flanschteilen 18 und den rückwärtigen Stirnseiten der Platten 32 und 34 vorgesehen.

Die Tiefensteuerung 80 ist, wie noch aus den Fig. 1 und 5 zu erkennen ist, mit einem an seinem oberen Ende gespreizt ausgebildeten Steuerarm 88 ausgerüstet. Ein mit dem Hohlträger 50 verbindbarer oder in dem Werkzeugträger vorgesehener Büchsensatz 90, der in den Ansprüchen als Zapfenlagerbuchse bezeichnet ist, nimmt einen zentralen gespreizten oder gegabelten Abschnitt 92 des Steuerarms 88 auf, dessen oberes Ende 94 an eine Einstellvorrichtung 100 angeschlossen ist. Die Einstellvorrichtung 100 liegt oberhalb des Hohlträgers 50 und bei ihrer Betätigung wird der Steuerarm um seine Schwenkachse in den Büchsensatz 90 verstellt, wodurch die Eindringtiefe der Arbeitswerkzeuge in den Boden geändert wird. Das bodenwärts und nach vorne gerichtete untere Ende 104 des Steuerarms 88 nimmt einen abbaubaren Radträger 110 auf, der wiederum ein oder mehrere auf dem Boden laufende Räder 112 zum Steuern der Arbeitstiefe aufnehmen kann.

Der Büchsensatz 90 ist in Öffnungen in den Seitenwänden 50a und 50b (Fig. 2) des Hohlträgers 50 eingesetzt, wobei die Öffnungen näher an der Unterseite 50d liegen. Die Lage des Büchsensatzes 90 in Fahrtrichtung kann variieren, und zwar in Abhängigkeit von der Wahl der Arbeitswerkzeuge bzw. der Gestaltung der Reiheneinheit. Bevorzugt wird jedoch eine Lage, in der der Steuerarm 88 unmittelbar vor den Platten 32 und 34 zu liegen kommt, so daß die Einstellvorrichtung 100 der Tiefensteuerung zumindest teilweise zwischen den Platten oberhalb des Hohlträgers 50 und unterhalb des unteren Lenkers 24 ihren Platz findet.

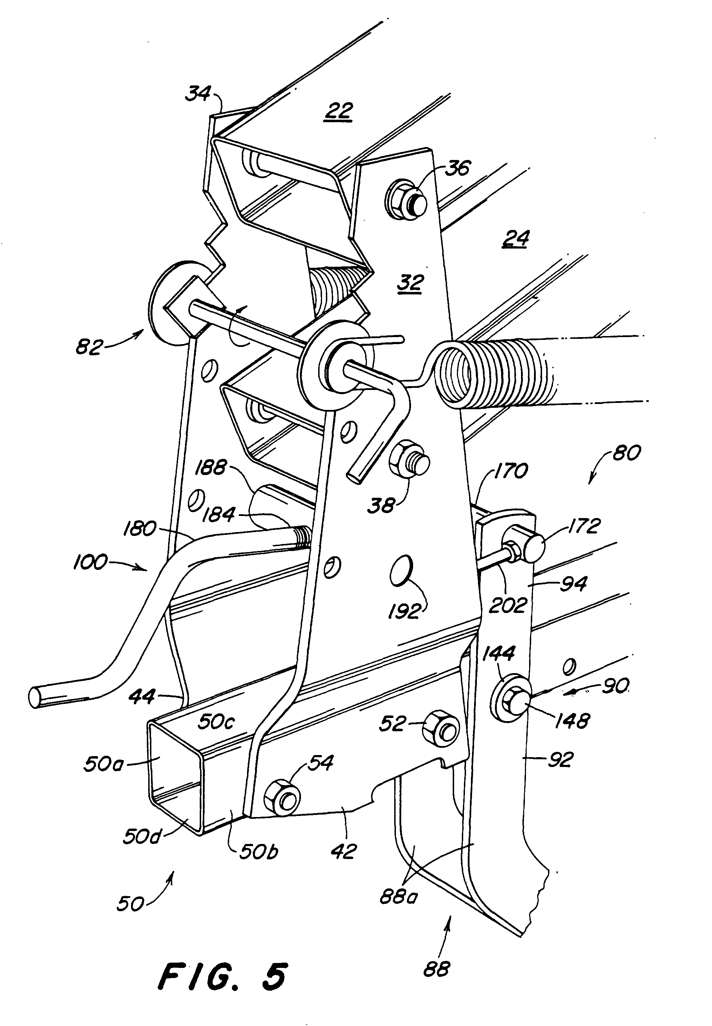

Der Büchsensatz 90 ist mit einem ersten und einem zweiten identisch ausgebildeten einstückigen Hülsenteil 120a und 120b versehen, wobei die Hülsenteile ähnlich der Hülse einer Schrotgewehrkugel gestaltet sind. Aus der Fig. 3 ist nun zu erkennen, daß der Hülsenteil 120b (der Hülsenteil 120a ist entsprechend ausgebildet) eine äußere zylinderförmig ausgebildete Lagerfläche 124 mit einem vergrößerten Durchmesser und einer axialen Breite aufweist, die etwas größer ist als die Breite des Abschnittes 92 des Steuerarms 88, der von dem Büchsensatz 90 getragen wird. Ein verlängerter innerer zylindrischer Abschnitt 126 hat ein inneres flaches Ende 128 und geht in einen ersten Ringabschnitt 130 über, der wiederum zu einem noch größeren geriffelten Abschnitt 132 neben der Lagerfläche 124 führt. Der Durchmesser der Öffnung in der Seitenwand 50a entspricht in etwa dem Durchmesser des geriffelten Abschnittes 132, so daß dessen Vorsprünge in die Innenwandung der Öffnung einschneiden und eine Relativdrehung zwischen dem Büchsensatz und den Seitenwänden 50a und 50b verhindern.

Der Durchmesser des Abschnittes 132 ist kleiner als der der Lagerfläche 124, so daß im Übergangsbereich eine Schulter 136 entsteht. Die Hülsenteile 120a und 120b werden in axialer Richtung von außen in die entsprechenden Öffnungen in den Seitenwänden 50a und 50b eingepreßt. Die Länge eines jeden Hülsenteils 120a und 120b von dem Ende 128 bis zu der Schulter 136 entspricht dem halben Abstand zwischen den Außenseiten der Seitenwände 50a und 50b, so daß die flachen Enden 128 gegeneinander anstoßen, wenn die Schultern 136 gegen die Außenseiten der Seitenwände 50a und 50b anliegen. Jeder Hülsenteil 120a und 120b ist noch mit einer zentralen Längsbohrung 138 versehen.

Relativ große Bohrungen 140 in den Abschnitten 92 des Steuerarms 88 haben einen Durchmesser, der etwas größer ist als der der Lagerfläche 124, auf denen der Steuerarm 88 drehbar gelagert ist. Die Abschnitte 92 des Steuerarms 88 werden auf den Lagerflächen durch Unterlegscheiben 144 und eine Schraube 148 und eine Mutter 150 gehalten. Die Schraube erstreckt sich dabei durch die Längsbohrung 138 und die Unterlegscheiben 144 liegen gegen die Außenseiten des Steuerarms 88 an. Bei einem Anziehen der Schraube 144 bzw. der Mutter 150 kommen die beiden Enden 128 der Hülsenteile 120 fest gegeneinander zur Anlage, so daß eine solide und dauerhafte Lagerung entsteht, die auch noch eine Deformation der Seitenwände 50a und 50b nach innen verhindert.

Wie aus der Zeichnung zu ersehen ist, ist das obere Ende des Steuerarms 88 gegabelt ausgebildet, so daß zwei identische Schenkel 88a entstehen, die zueinander und zu den Seitenwänden 50a und 50b parallel verlaufen. Der gegenseitige Abstand der beiden Schenkel 88a entspricht dabei in etwa dem Abstand der Seitenwände 50a und 50b, so daß ein guter Anschluß entsteht. Der Steuerarm kann aber auch auf seiner ganzen Länge aus zwei Schenkeln 88a bestehen. In einem solchen Fall dienen dann ein Abstandshalter 160 und eine Schraube 162 dazu, das untere Ende 104 des Steuerarms 88 auf dem richtigen Abstand zu halten. Gleichfalls dienen Schraube 162 und Abstandshalter auch zum Anschluß des Radträgers 110. Zusätzliche Schrauben 164 können sich noch durch die Schenkel 88a und den Radträger 110 erstrecken, um den Radträger in seiner Stellung ausreichend zu sichern.

Die oberen Enden der Schenkel 88a werden durch den Büchsensatz auf dem richtigen Abstand gehalten. Die Schenkel 88a sind dann zwischen den Unterlegscheiben 144 und den Seitenwänden 50a und 50b eingebettet. Die oberen Enden der Schenkel 88a sind aufgebohrt und nehmen einen Drehzapfen 170 gelenkig auf. Dieser ist in den Fig. 1 und 5 erkennbar und liegt etwas oberhalb des Hohlträgers 50. Die Enden 172 des Drehzapfens 170 sind abgedreht und stehen zumindest an einer Seite über einen Schenkel 88a nach außen vor. Außerdem ist der Drehzapfen in seinem mittigen Bereich mit einer radialen Durchgangsbohrung versehen, durch die das eine Ende einer Kurbel 180 geführt ist. Die Kurbel 180 ist in der Durchgangsbohrung drehbar und ist durch eine in Fig. 1 erkennbare Muttern-Scheiben-Einheit 182 gesichert. Der Schaft der Kurbel 180 ist außerdem noch mit einem Gewindeabschnitt 184 versehen, der in eine Gewindebohrung in einem zweiten Drehzapfen 188 (Fig. 5) einschraubbar ist. Auch der zweite Drehzapfen 188 ist mit abgedrehten Enden 192 versehen, die zu seiner drehbaren Lagerung in den Platten 32 und 34 dienen. Ein Griffteil 196 erstreckt sich in Arbeitsrichtung oder mit Bezug auf Fig. 1 zwischen den Platten 32 und 34 nach rückwärts, so daß er an jeder Reiheneinheit 16 leicht zugänglich ist. Bei einem Drehen des Griffteils verstellt sich die Kurbel in dem zweiten Drehzapfen 188, wodurch der erste Drehzapfen 170 auf den zweiten zu bewegt oder von diesem fort bewegt wird. Dabei verschwenkt der Steuerarm 88 um seine Schwenkachse am Hohlträger 50, wodurch das oder die Einstellräder für die Arbeitstiefe mit Bezug auf den Hohlträger 50 vertikal verstellt werden.

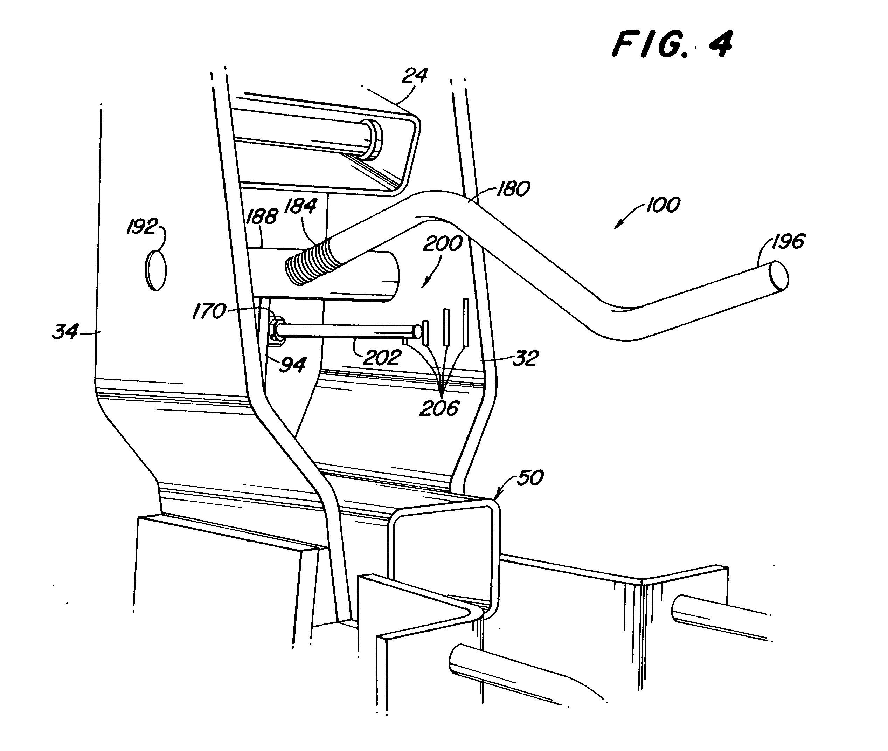

Um das Einstellen der Arbeitstiefe der einzelnen Reiheneinheiten zu erleichtern aber auch um eine Wiederholbarkeit zu gewährleisten, ist ein Tiefenanzeiger 200 vorgesehen, der nahe der Kurbel angeordnet ist. Zu dem Tiefenanzeiger 200 gehört ein Zeiger 202, dessen eines Ende, wie aus Fig. 5 zu erkennen ist, mit dem einen abgedrehten Ende 172 des ersten Drehzapfens 170 verbunden ist. Der Zeiger steht, wie es in Fig. 4 zu erkennen ist, freitragend nach rückwärts und sein anderes Ende befindet sich an der Innenseite der Platte 32. Linien 206 oder andere Markierungszeichen an der Innenseite der Platte 32 bezeichnen die eingestellte Arbeitstiefe und erleichtern insbesondere wieder ihr Auffinden. Dadurch daß der Zeiger 202 an dem ersten Drehzapfen 170 fest angeschlossen ist, werden Zeigerbewegungen, die nicht in Arbeitsrichtung verlaufen, minimiert. Es entsteht dadurch eine direktere Winkelanzeige des Steuerarms bzw. der eingestellten Arbeitstiefe.

Je nach den Einsatzbedingungen sind größere oder kleinere Aufstandsflächen für das oder die Einstellräder erwünscht. Die Träger 110 sind deshalb auswechselbar, beispielsweise durch Entfernen der Schrauben 162 und 164 (Fig. 6a) und Ersetzen des Trägers 110 durch einen in Fig. 6b erkennbaren und ebenfalls anschraubbaren Ersatzträger 110a, der die Benutzung eines Doppelrades 112a erlaubt.

## Patentansprüche

1. Landwirtschaftliches Gerät mit einer Werkzeugschiene (12), wenigstens einem an diese vertikal verstellbar anschließbaren Werkzeugträger (50) und einer Tiefensteuerung (80) zum Führen des Werkzeugträgers (50) in einem vorgegebenen Abstand über dem Boden, wobei die Tiefensteuerung (80) mindestens ein auf dem Boden laufendes Rad (112) aufweist, das an einem am Werkzeugträger (50) angelenkten Steuerarm (88) angeschlossen ist, der über eine Einstellvorrichtung (100) vertikal verstellbar ist, und der Steuerarm (88) zwischen seinen Enden am Werkzeugträger (50) derart angelenkt ist, daß sein oberes Ende oberhalb des Werkzeugträgers (50) liegt und mit der Einstellvorrichtung (100) verbunden ist, dadurch gekennzeichnet, daß der Werkzeugträger (50) hohlförmig ausgebildet ist, daß in dem Werkzeugträger (50) eine Zapfenlagerbuchse (90) vorgesehen ist, mit der der Steuerarm (88) schwenkbar zwischen seinen Enden verbunden ist, und daß die Zapfenlagerbuchse (90) einen ersten und einen zweiten jeweils von außen in den Werkzeugträger (50) einsetzbaren Hülsenteil (120a und 120 b) mit einer äußeren Lagerfläche (124) zur drehbaren Lagerung des Steuerarms (88) aufweist, wobei beide Hülsenteile (120a, 120b) im eingesetzten Zustand miteinander verbindbar sind und beide Hülsenteile (120a, 120b) im eingesetzten Zustand mit ihren der Lagerfläche (124) abgelegenen Enden (128) gegeneinander anliegen, und jeder Hülsenteil (120a, 120b) in den Werkzeugträger (50) drehfest einsetzbar ist.

2. Landwirtschaftliches Gerät nach Anspruch 1, dadurch gekennzeichnet, daß der Steuerarm (88) zumindest im Bereich seiner Anlenkstelle am Werkzeugträger (50) gegabelt ausgebildet ist und einen ersten und einen zweiten Schenkel (88a) aufweist, deren gegenseitiger Abstand der Breite oder etwa der Breite des Werkzeugträgers (50) entspricht.

3. Landwirtschaftliches Gerät nach Anspruch 2, dadurch gekennzeichnet, daß die Schenkel (88a). an der äußeren Lagerfläche (124) drehbar aufgenommen sind.

4. Landwirtschaftliches Gerät nach Anspruch 2 oder 3, dadurch gekennzeichnet, daß der Werkzeugträger (50) ein rechteckiges Querschnittsprofil aufweist und die Lagerflächen (124) der Zapfenlagerbuchse (90) im eingesetzten Zustand an den Außenseiten der Seitenwände (50a, 50b) des Werkzeugträgers (50) liegen und die Schenkel (88a) des Steuerarms (88) drehbar aufnehmen, die durch mindestens eine Unterlegscheibe (144) und eine durch die Zapfenlagerbuchse (90) geführte Schraubverbindung gesichert sind.

5. Landwirtschaftliches Gerät nach Anspruch 1, dadurch gekennzeichnet, daß die Einstellvorrichtung (100) mit einem Gewindeabschnitt (184) versehen und an zwei mit dem Werkzeugträger (50) verbundene hochstehende Platten (32, 34) angeschlossen ist.

6. Landwirtschaftliches Gerät nach Anspruch 2 und 5, dadurch gekennzeichnet, daß die oberen Enden der Schenkel (88a) des Steuerarms (88) über einen Drehzapfen (170) miteinander verbunden sind, der das eine Ende der als Kurbel ausgebildeten Einstellvorrichtung (100) und eine Tiefenanzeige (200) aufnimmt.

7. Landwirtschaftliches Gerät nach Anspruch 6, dadurch gekennzeichnet, daß die Tiefenanzeige (200) einen mit dem Drehzapfen (170) verbundenen Zeiger (202) aufweist, der mit einer Markierung (206) an einer der mit dem Werkzeugträger (50) verbundenen Platten (32, 34) zusammenwirkt.

8. Landwirtschaftliches Gerät nach einem oder mehreren der vorherigen Ansprüche, dadurch gekennzeichnet, daß der Steuerarm (88) an seinem der Einstellvorrichtung (100) abgelegenen unteren Ende (104) mit Radträgern (110, 110a) unterschiedlicher Größe für die Aufnahme von einem oder mehreren auf dem Boden laufenden Rädern (112, 112a) verbindbar ist.

## Claims

1. Agricultural apparatus having a tool bar (12), at least one tool carrier (50), which can be connected to said tool bar so as to be vertically adjustable, and a depth control (80) for guiding the tool carrier (50) at a preset spacing above the ground, the depth control (80) having at least one wheel (112), which runs on the ground and is connected to a control arm (88), which is linked to the tool carrier (50) and is vertically adjustable via an adjustment device (100), and the control arm (88) being linked between its ends to the tool carrier (50) in such a manner that its upper end is situated above the tool carrier (50) and is connected to the adjustment device (100), characterised in that the tool carrier (50) has a hollow configuration, in that a journal bearing bush (90) is provided in the tool carrier (50) and to which journal bearing bush there is connected the control arm (88) so as to pivot between its ends, and in that the journal bearing bush (90) has a first and a second shell part (120a and 120b) respectively, which can be inserted into the tool carrier (50) from the exterior and has an external bearing face (124) for rotatable mounting of the control arm (88), both shell parts (120a, 120b) being connectable to each other in the inserted state and both shell parts (120a, 120b) in the inserted state abutting against each other by their ends (128) orientated away from the bearing face (124), and each shell part (120a, 120b) being inserted non-rotatably into the tool carrier (50).

2. Agricultural apparatus according to claim 1, characterised in that the control arm (88) has a bifurcated configuration at least in the region of its linkage point to the tool carrier (50) and has a first and a second member (88a), the mutual spacing of which corresponds to the width or approximately the width of the tool carrier (50).

3. Agricultural apparatus according to claim 2, characterised in that the members (88a) are received rotatably on the external bearing face (124).

4. Agricultural apparatus according to claim 2 or 3. characterised in that the tool carrier (50) has a rectangular cross-sectional profile and the bearing faces (124) of the journal bearing bush (90), in the inserted state, are located on the external sides of the lateral walls (50a, 50b) of the tool carrier (50) and receive the members (88a) of the control arm (88) rotatably, which members are secured by at least one plain washer (144) and a screw connection guided through the journal bearing bush (90).

5. Agricultural apparatus according to claim 1, characterised in that the adjustment device (100) is provided with a threaded portion (184) and is connected to two upright plates (32, 34), which are connected to the tool carrier (50).

6. Agricultural apparatus according to claim 2 and 5, characterised in that the upper ends of the members (88a) of the control arm (88) are connected to each other via a trunnion (170) which receives the one end of the adjustment device (100), configured as a crank, and receives a depth indicator (200).

7. Agricultural apparatus according to claim 6, characterised in that the depth indicator (200) has a pointer (202), which is connected to the trunnion (170) and co-operates with a marking (206) on one of the plates (32, 34) connected to the tool carrier (50).

8. Agricultural apparatus according to one or more of the preceding claims, characterised in that the control arm (88) can be connected, at its lower end (104) orientated away from the adjustment device (100), to wheel carriers (110, 110a) of varying sizes in order to receive one or more wheels (112, 112a) which run on the ground.

## Revendications

1. Engin agricole comportant un rail (12) de support d'outils, comportant au moins un porte-outil (50) pouvant être raccordé de manière à être réglable verticalement à ce rail de support d'outils, et un dispositif (80) de commande de profondeur, pour guider le porte-outil (50) à une distance prédéterminée au-dessus du sol, et dans lequel le dispositif (80) de commande de profondeur comporte une roue (112) qui roule sur le sol et est raccordée à un bras de commande (88), qui est articulé sur le porte-outil (50) et est réglable verticalement au moyen d'un dispositif de réglage (100), et le bras de commande (88) est articulé entre ses extrémités sur le support d'outils (50) de telle sorte que son extrémité supérieure est disposée au-dessus du porte-outil (50) et est reliée au dispositif de réglage (100), caractérisé en ce que le porte-outil (50) est agencé avec une forme creuse, que dans le porte-outil (50) est prévu un manchon de palier (90), auquel le bras de commande (88) est relié de manière à pouvoir pivoter entre ses extrémités, et que le manchon de palier (90) comporte des premier et second éléments de douille (120a et 120b), pouvant être insérés respectivement de l'extérieur dans le porte-outil (50) et possédant une surface extérieure de palier (124) pour supporter, avec possibilité de rotation, le bras de commande (88), les deux éléments de douille (120a,120b) pouvant être reliés entre eux à l'état inséré et les deux éléments de douilles (120a,120b) s'appliquant l'un contre l'autre, à l'état inséré, par leurs extrémités (128) éloignées de la surface de palier (124), et chaque élément de douille (120a,120b) pouvant être inséré d'une manière bloquée en rotation dans le porte-outil (50).

2. Engin agricole selon la revendication 1, caractérisé en ce que le bras de commande (88) est agencé avec une forme en fourche au moins dans la zone de son point d'articulation sur le porte-outil (50) et possède des première et seconde branches (88a), dont la distance réciproque correspond à la largeur ou approximativement à la largeur du porte-outil (50).

3. Engin agricole selon la revendication 2, caractérisé en ce que les branches (88a) sont reçues de manière à pouvoir tourner, sur la surface extérieure de palier (124).

4. Engin agricole selon la revendication 2 ou 3, caractérisé en ce que le porte-outil (50) possède un profil rectangulaire en coupe transversale et les surfaces de palier (124) du manchon de palier (90) s'appliquent, à l'état inséré, contre les faces extérieures des parois latérales (50a,50b) du porte-outil (50) et reçoivent, avec possibilité de rotation, les branches (88a) du bras de commande (88), qui sont bloquées par au moins une rondelle (144) et un système de liaison à vis traversant la douille de palier (90).

5. Engin agricole selon la revendication 1, caractérisé en ce que le dispositif de réglage (100) comporte une partie filetée (184) et des plaques verticales (32,34), qui sont reliées au porte-outil (50).

6. Engin agricole selon les revendications 2 et 5, caractérisé en ce que les extrémités supérieures des branches (88a) du bras de commande (88) sont reliées entre elles au moyen d'un tourillon (170), qui reçoit l'extrémité du dispositif de réglage (100) agencé sous la forme d'une manivelle et une unité (200) d'indication de profondeur.

7. Engin agricole selon la revendication 6, caractérisé en ce que l'unité (200) d'indication de profondeur comporte une aiguille (202) qui est reliée au tourillon (170) et qui coopère avec une marque (206) située sur l'une des plaques (32,34) reliées au porte-outil (50).

8. Engin agricole selon une ou plusieurs des revendications précédentes, caractérisé en ce que le bras de commande (88) peut être relié, au niveau de son extrémité inférieure (104) éloignée du dispositif de réglage (100), à des supports de roues (110, 110a) ayant des tailles différentes et servant à recevoir une ou plusieurs roues (112,112a) qui roulent sur le sol.
